(19) **Europäisches Patentamt**

**European Patent Office**

**Office européen des brevets**

(11) **EP 0 922 247 B1**

(12) **EUROPEAN PATENT SPECIFICATION**

(45) Date of publication and mention
of the grant of the patent:
**27.03.2002 Bulletin 2002/13**

(51) Int Cl.⁷: **G05D 7/01**, F23N 1/00

(21) Application number: **97941930.6**

(86) International application number:
**PCT/EP97/04356**

(22) Date of filing: **11.08.1997**

(87) International publication number:
**WO 98/07081 (19.02.1998 Gazette 1998/07)**

(54) **FLOW CONTROL SYSTEM**

DURCHFLUSSSTEUERUNGSSYSTEM

SYSTEME DE COMMANDE DE DEBIT

(84) Designated Contracting States:
**DE ES FR GB IT NL**

(30) Priority: **15.08.1996 GB 9617123**

(43) Date of publication of application:
**16.06.1999 Bulletin 1999/24**

(73) Proprietor: **HONEYWELL B.V.**
**1101 EA Amsterdam Z.O. (NL)**

(72) Inventor: **TWIDDY, Bernard William**
**Camberley, Surrey GU15 1BE (GB)**

(74) Representative:
**Leson, Thomas Johannes Alois, Dipl.-Ing. et al**
**c/o TBK-Patent,**
**P.O. Box 20 19 18**
**80019 München (DE)**

(56) References cited:
**EP-A- 0 183 879**          **DE-A- 4 016 140**

- **PATENT ABSTRACTS OF JAPAN vol. 5, no. 139 (M-086), 3 September 1981 & JP 56 071714 A (MATSUSHITA ELECTRIC IND CO LTD), 15 June 1981,**
- **PATENT ABSTRACTS OF JAPAN vol. 8, no. 73 (M-287), 5 April 1984 & JP 58 217877 A (RINNAI KK), 17 December 1983,**
- **PATENT ABSTRACTS OF JAPAN vol. 8, no. 280 (M-347), 21 December 1984 & JP 59 147930 A (MITSUBISHI JUKOGYO KK), 24 August 1984,**

## Description

The present invention relates to a flow control system suitable for fluids and especially but not solely a system for the control of a gas fuel supply.

A gas flow control is incorporated in the input to a gas-fuelled appliance in order to control and regulate the supply of gas so that the pressure input to one or more burners does not vary with fluctuations which might occur in the supply pressure, thereby to provide safe ignition and shut-down.

In one conventional form of flow control, a valve and a low/high-fire (i.e. dual mode) governor is located in parallel with a valve and single-mode governor; however, this design requires a very delicate setting procedure of the governors, involving setting one at a given value, then the other at a comparable but slightly differing one, then repeating the process a number of times with incrementally changing values. Thus this procedure can be prolongued and complex, and if done incorrectly or hastily risks mal-adjustment, inefficient operation and/or instability. One example of a parallel arrangement of governors is the De Dietrich DTG 250 boiler range.

In another type of conventional flow control described in British Patent Specification No. 2275985, a flow line with a valve and governor is in parallel with another flow line having only a valve. While this arrangement does not require a complex setting operation, it does not provide regulation of the gas flow over the total range of inlet pressures, but only up to the point at which the governor is fully closed.

DE-A-40 16 140 discloses a flow control system comprising an input, an output and a plurality of flow lines in parallel. Each flow line comprises a shut-off valve and a pressure regulating valve.

The present invention provides a flow control system according to Claim 1.

In this way, the present invention can provide a stable arrangement which can be readily, easily and quickly set. Moreover, the arrangement provides full regulation during operation at all firing modes.

The orifice means may comprise a nozzle or a plate with an aperture of a predetermined size being reduced compared to the cross-section of at least the adjacent portion of the system. Preferably, the nozzle or plate is locatable (advantageously by threaded engagement with a recess) at the outlet of the valve means and regulateing means of one flow line.

In one preferred form, the system comprises only two flow lines in parallel.

In an alternative form, the system comprises three flow lines in parallel having a common input and a common output, one of said flow lines is restricted to provide a first pressure differential in that flow line downstream of the respective regulating means, and another of said flow lines is restricted to provide a second pressure differential in that flow line downstream of the respective regulating means, said second pressure differential being less than said first pressure differential.

The present invention is applicable to fluids whether liquids or gases, including inert gases and gaseous fuels.

In order that the invention may more readily be understood, a description is now given, by way of example only, reference being made to the accompanying drawings in which:-

Figure 1 is a schematic diagram of a flow control system embodying the present invention;
Figure 2 is a view, in cross-section, of part of the control system shown in Figure 1;
Figure 3 is a graph of the pressure characteristics of operation of the system of Figure 1;
Figure 4 is a graph of the flow rate characteristics operation of the system of Figure 1;
Figure 5 is a schematic diagram of another embodiment of the present invention;
Figure 6 is a graph of the pressure characteristics of operation of the system of Figure 5; and
Figure 7 is a graph of the flow rate characteristics operation of the system of Figure 5.

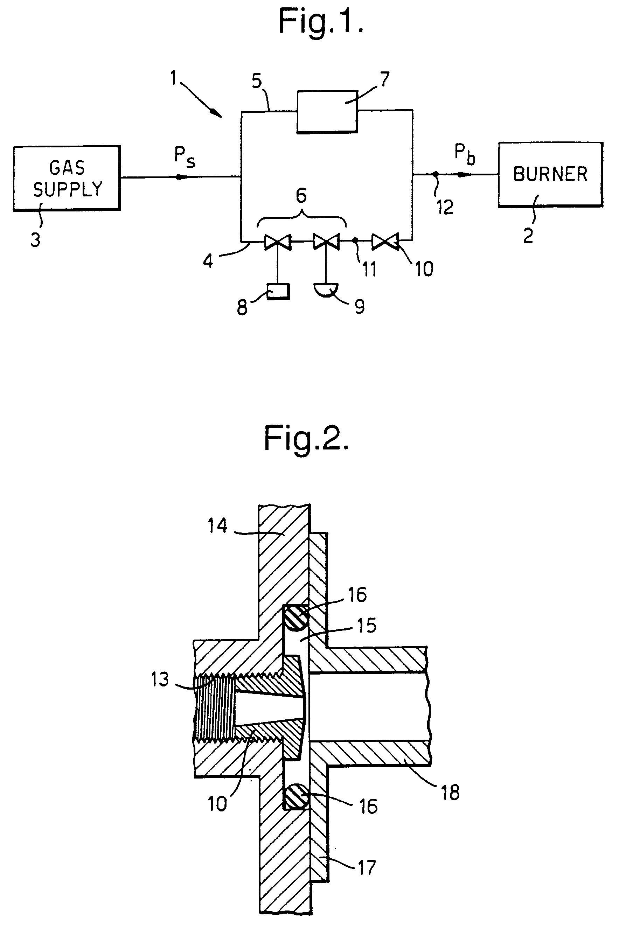

Figures 1 and 2 show a flow control system (generally designated 1) for ensuring that the pressure Pb of the gas flow which is input to burner 2 is regulated (ie. remains constant) regardless of fluctuations (within normal permitted bands of 20 mbar, + 5 mbar or -3mbar) in the output pressure from the gas supply 3 (typically the gas mains). Flow control system 1 has two flow lines 4, 5 in parallel, each having a valve unit 6, 7, each of the valve units incorporating a pair of solenoid valves 8 and a single-mode governor 9. Flow line 4 has a fixed-orifice restrictor 10 which causes a pressure differential between points 11 and 12 such that flow lines 4 and 5 share the flow when operating at "high-fire" operation mode, the lines being fully regulated. The valve units 6, 7 are standard, conventional mass-produced and widely-used valve units which are hence low cost, such that it is more economical to use two of them in system 1 to give the larger flow capacity required, rather than using one specially-designed valve unit of the larger required capacity.

Thus, taking as an example one of the commercially-available valve units known as the Compact valve range available from Honeywell B.V., such a valve can be used to control typically the natural gas input supply to a gas burner up to a maximum capacity of 75 K Watts. However, by employing the present invention, two such valve units can be used in the system 1 to control the natural gas input supply to a gas burner up to a maximum capacity of 125K Watts. The component costs and installation costs of the system 1 are considerably less than the equivalent costs for a single valve unit designed specifically to accommodate the increased flow rate of the larger capacity burner with low-fire and high-fire rate capability.

In order to ensure that a heating appliance of any given capacity can provide a comparatively wide range of operation ensuring e.g. safe ignition (especially for cross-lighting of more than one burner), efficient heating effect and temperature control of the heating medium (especially under low heating load periods), less on/off cycling and quieter operation, it is normal for a heating appliance to have low-fire and high-fire capability. Typically, in a single valve unit system, this is achieved by having a governor with two pressure settings, one operating the governor in a range of pressures to provide low-fire operation of the burner and the other setting operating the governor in a higher range of pressures to provide high-fire operation of the burner; the appropriate setting of the governor is selected by application of an electrical instruction signal.

In Figure 1, restrictor 10 is a nozzle with a circular central aperture typically of 8 mm, positioned at the outlet of valve unit 6; typically, the valve unit 6 has a threaded output, and the restrictor 10 has a peripheral edge shaped to enable engagement in the output. In this way, the restrictor 10 ensures a well-defined amount of restriction and can be easily and quickly attached to the valve; moreover, this arrangement allows the ready attachment and detachment of restrictors, and ensures that any one of a range of restrictors of different aperture sizes can be used according to the requirements and capabilities of the system and individual valve units as used. Moreover, by stipulating that one valve must be of the "threaded output" type and the other is of the "non-threaded output" type, a system designer can ensure that the restrictor 10 is placed into the correct valve, thereby effectively eliminating the possibility of assembly errors. Restrictor 10 provides a simple, easy and low-cost implementation of the necessary restriction and enables the degree of restriction to be closely suited to the actual gas and component ratings used. In another implementation, the restrictor 10 is shaped as an aperture disc.

In an alternative implementation of restrictor 10, it is placed in flow line 4 downstream of the governor 9. Alternatively, the required restriction can be designed into the unit or the piping e.g. by incorporating a section being of reduced cross-section.

Figure 2 shows the restrictor 10, shaped as a nozzle, screwed to threaded outlet 13 of housing 14 of unit 6; housing 14 has a recess 15 containing 0-ring 16 which seals with flange 17 of gas pipe 18 by bolts (not shown). In another embodiment, restrictor 10 is in the shape of an apertured plate lying in recess 15.

The size of the restrictor and the resulting pressure differential between points 11 and 12 are carefully chosen to ensure valve unit 6 continues to contribute a significant share (typically 30%) of the total high-fire load when both valve units 6 and 7 are operating. To ensure this, the pressure at point 11 in flow line 4 must be higher than the high-fire pressure at point 12.

The size of the restrictor 10 is such as to produce, at the low-fire rate, a pressure at point 11 higher (typically 1mbar or more) than the high-fire pressure at point 12, to prevent valve unit 6 shutting off completely when both valve units are operating in the high-fire mode.

Additionally, the pressure at point 11 must be low enough to ensure governor 9 is still working within its regulating capabilities even at the minimum permitted pressure Ps for gas supply 3. The value of the aperture size is determined by the well known formula:-

$$Q = 0.036 \; d^2 \; C \sqrt{\frac{P}{S}}$$

where

Q = volume of gas in cubic meters per hour (m³/h)
d = diameter of restrictor 10 in millimeters (mm)
P = pressure behind the nozzle 10 in millibars (mbar)
S = specific gravity of gas
C = the "coefficiency of discharge".

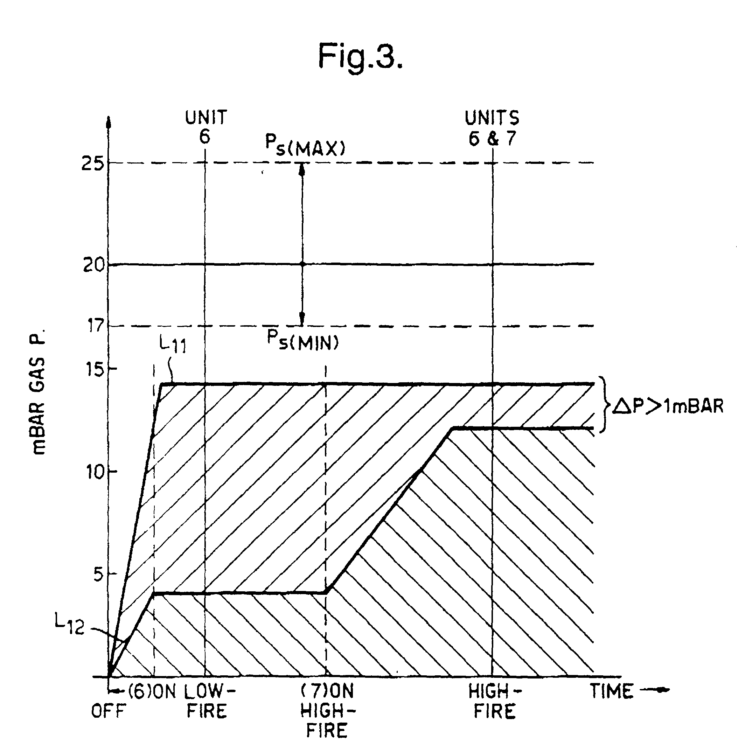

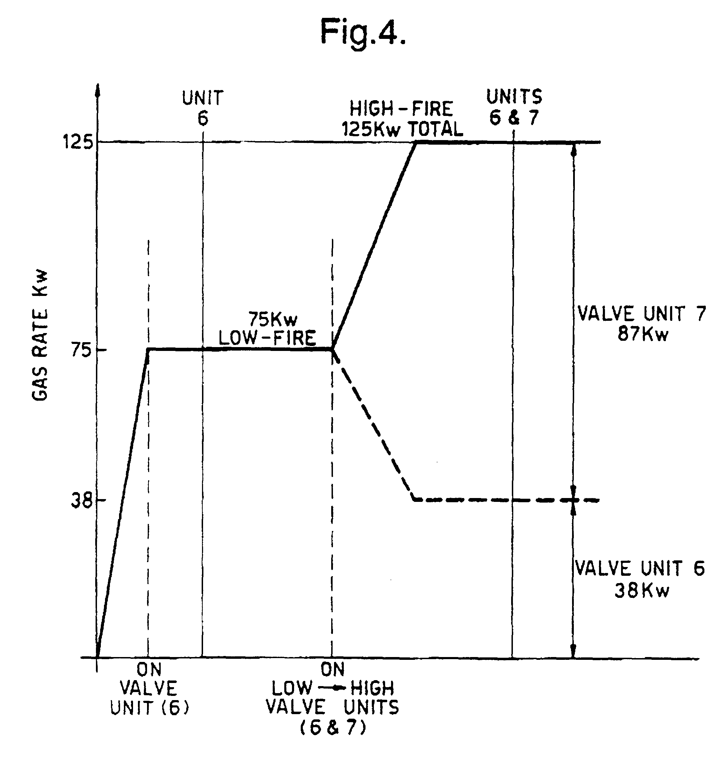

The performance of the control system of Figure 1 is illustrated in Figures 3 and 4 showing the pressures at points 11 and 12 and the flow rates of valve units 6 and 7 respectively. Figure 3 illustrates, in a stylised graphical form, the pressures at points 11 and 12 during a typical burner sequence from "off" through "ignitition at low-fire" to "high-fire". The lines $L_{11}$ and $L_{12}$ show the absolute pressure values at the points 11 and 12 respectively for the various stages of the ignition sequence; the upper portion of Figure 3 shows the range of permitted variation of Ps (i.e. 17 to 25 mbar) for the 2H family of gases, within which range the control system must operate in order to satisfy industry requirements. From Figure 3 it can be seen that, at low-fire (with only unit 6 operating) the pressure at point 11 is 14 mbar and the pressure at point 12 is 4 mbar whereas at high-fire (with units 6 and 7 operating) the pressure at point 12 is still 14 mbar but the pressure at point 11 is now 11.5 mbar.

Figure 4 also illustrates in a stylised graphical form the equivalent gas flow rates in valve units 6, 7 and burner 2 during the same ignition sequence.

Provision of restrictor 10 ensures that system 1 can readily be set up by: initially energising valve unit 6 alone; adjusting the governor 9 setting screw to achieve the desired low fire pressure of 4 mbar in line 12; next, proceeding to the high-fire mode by energising valve unit 7; then adjusting the setting screw of the governor of valve unit 7 to achieve the desired high-fire pressure of 11.5 mbar in line 12. Thus the setting up procedure is simple, without complex iterative adjustments.

In both low-fire and high-fire modes, system 1 is fully regulated in that each gas flow is directly subject to the operation of a governor for all values of gas supply pressure not only within but also in excess of industry requirements.

Moreover, the provision of restrictor 10 obviates the need for the governor 9 to have a dual mode (i. e. low/high) solenoid-operable setting, but instead can be a single mode governor which is a considerably lower cost.

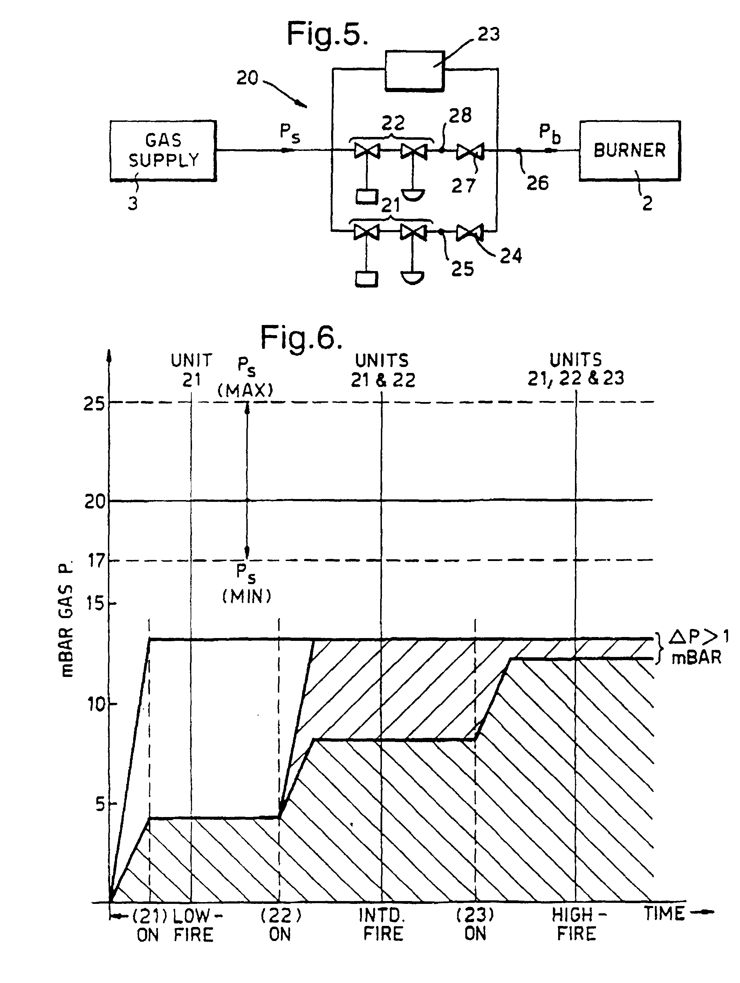

Figure 5 shows another flow system 20 which incorporates three valve units 21, 22, 23 each of the same form and capacity as units 4, 5; the use of three valve units ensures that the maximum flow rate of system 20 is capable of operating with an appliance up to a capacity of 180K Watts, at full fire, with a three firing rate capability. Restrictor 24 typically has an aperture of 12.5 mm which provides an appropriate pressure differential between points 25 and 26, and restrictor 27 typically has an aperture of 8.5 mm which provides a pressure differential between points 28 and 26.

Again the sizes of restrictors 24 and 27 are carefully chosen to ensure valve unit 21 continues to contribute significantly (typically 55%) to the total medium fire load when both valve units 21 and 22 are operating. Also at high-fire, valve units 21 and 22 continue to contribute significantly (typically 20% each) to the total high-fire load when all three valve units 21, 22 and 23 are operating. Again, to achieve this, the pressure at points 25 and 28 must be higher than the high-fire pressure at point 26. Clearly there will be other intermediate firing rates possible depending on other operating combinations of valve units 21, 22 and 23.

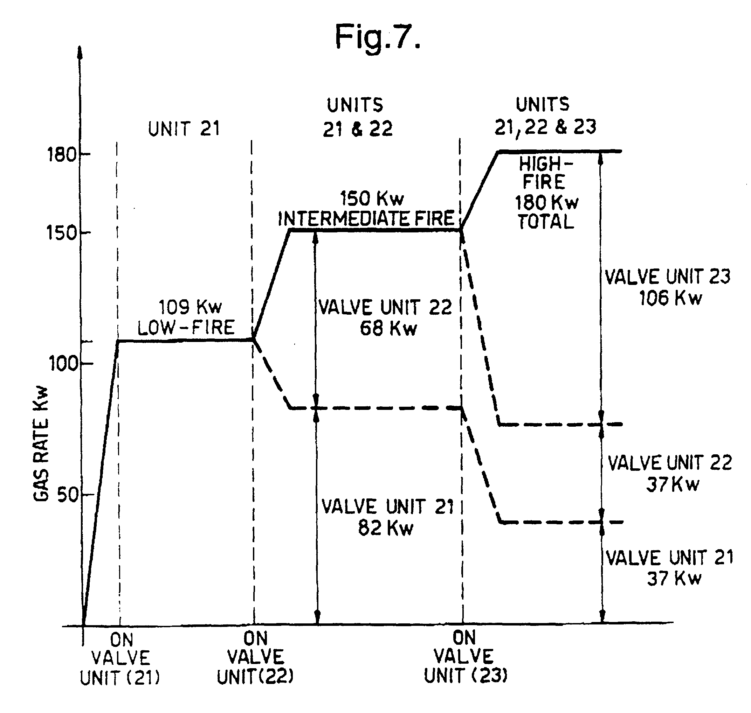

The determination of the sizes of the restrictors 24 and 27 is in a similar manner to that for the first embodiment. Thus, the restrictors must be carefully calculated to produce differential pressures at the low-fire and intermediate rates at points 25 and 28 higher (typically 1mbar or more) than the high-fire pressure in line 26. Additionally, again the pressures at points 25 and 28 must be low enough to ensure valve units 21 and 22 do not run out of capacity at the minimum gas supply pressure for normal operation. The values of the aperture sizes are determined by the same formula mentioned before. The performance of the control system of Figure 5 is illustrated in Figures 6 and 7 showing the pressures at points 25 and 28 and flow rates of valve units 21, 22 and 23 respectively.

Figure 6 illustrates, again in a stylised graphical form, the pressures at points 25, 28 and 26 during a typical burner sequence from "off" through "ignition at low fire" to "intermediate-fire" to "high-fire".

Figure 7 also illustrates in a stylised graphical form the equivalent gas flow rates in valve units 21, 22, 23 and burner 2 during the same sequence of operation.

Clearly, the invention includes control systems incorporating more than three flow lines with features in similar manner to those embodiments described above.

**Claims**

1. A flow control system comprising an input connected with an output of a gas supply (3), a plurality of flow lines (4, 5) in parallel and an output (12) connected with an input of at least one burner (2), in order to control the gas flow so that the pressure input (Pb) to said burner (2) does not vary with fluctuations in the pressure output of said gas supply (3), **characterized in that** it comprises means to provide low-fire and high-fire modes of operation, comprising the following features:

   a) a first flow line (5) comprises only a valve unit (7) having a valve means (8) and a regulating means (9);
   b) each additional flow line (4) connected in parallel to said first flow line (5) comprises a valve unit (6) having a valve means (8) and a regulating means (9) and a restrictor (10) located downstream of said regulating means (9), to provide a pressure differential **in that** flow line (4) downstream of the regulating means (9), namely between a first point (11) upstream of said restrictors (10) and a second point (12) downstream of said restrictors (10),
   c) said restrictors (10) are fixed orifice restrictors;
   d) the size of said restrictors (10) are chosen to produce, at the low-fire rate, pressures at said first point (11) higher than a high-fire pressure at said second point (12), whereby the pressures at said first point (11) must be low enough to ensure the regulating means (9) still working at the minimum pressure for said gas supply (3).

2. The flow control system according to claim 1, wherein the aperture sizes of said restrictors (10) are calculated by the formula:

$$Q = 0.036d^2c\sqrt{\frac{P}{S}}$$

   where

   Q = volume of gas in cubic meters per hour (m³/h)
   d = diameter of restrictor (10) in millimetes (mm)
   P = pressure differential across the nozzle (10) in millibars (mbar)
   S = specific gravity of gas
   C = the "coefficiency of discharge".

3. The flow control system according to claim 1 or 2, wherein said valve means (8) is a solenoid valve and said regulating means (9) is a single mode governor.

4. The flow control system according to any of Claims 1 to 3, wherein said restrictors (10) comprises a nozzle or a plate, said plate or nozzle is locatable by threaded engagement with the outlet of the valve means and regulating means (6) of one flow line (4).

5. The flow control system according to any preceding Claim, wherein the valve means (8) and the regulating means (9) in a flow line form a composite unit.

6. The flow control system according to any preceding Claim comprising only two flow lines (4, 5) in parallel.

7. The flow control system according to any of Claims 1 to 5 comprising three flow lines (21, 22, 23) in parallel having a common input and a common output, one of said flow lines (21, 24) is restricted to provide a first pressure differential in that flow line downstream of the respective regulating means, and another of said flow lines (22, 27) is restricted to provide a second pressure differential in that flow line downstream of the respective regulating means, said second pressure differential being less than said first pressure differential.

**Patentansprüche**

1. Durchflusssteuerungssystem, mit einer Eingabe, die mit einer Ausgabe einer Gaszufuhr (3) verbunden ist, mit einer Vielzahl paralleler Durchflussleitungen (4, 5) und einer Ausgabe (12), die mit einer Eingabe zumindest eines Brenners (2) verbunden ist, um den Gasdurchfluss zu steuern, so dass sich die Druckeingabe (Pb) in den Brenner (2) nicht mit Schwankungen bei der Druckausgabe der Gaszufuhr (3) ändert, **dadurch gekennzeichnet, dass** Mittel vorgesehen sind, um eine Hoch-Leistungsfeuerung und eine Niedrig-Leistungsfeuerung des Betriebs durchzuführen, mit den folgenden Merkmalen:

a) einer ersten Durchflussleitung (5), die nur eine Ventileinheit (7) hat, die ein Ventilmittel (8) und ein Regulierungsmittel (9) hat;
b) wobei jede zusätzliche Durchflussleitung (4), die parallel zu der ersten Durchflussleitung (5) verbunden ist, eine Ventileinheit (6), die ein Ventilmittel (8) und ein Regulierungsmittel (9) hat, und eine Drossel (10) hat, die stromabwärts des Regulierungsmittels (9) angeordnet ist, um ein Druckdifferential in dieser Durchflussleitung (4) stromabwärts des Regulierungsmittels (9) zu erzeugen, und zwar zwischen einem ersten Punkt (11), der stromaufwärts der Drosseln (10) angeordnet ist, und einem zweiten Punkt (12), der stromabwärts der Drosseln (10) angeordnet ist,
c) wobei die Drosseln (10) befestigte Öffnungsdrosseln sind;
d) wobei die Größe der Drosseln (10) ausgewählt wird, um Drücke bei Niedrig-Feuerungsraten zu erzeugen, die an dem ersten Punkt (11) größer sind, als der Druck bei der Hoch-Leistungsfeuerung an dem zweiten Punkt (12) ist, wobei die Drücke an dem ersten Punkt (11) gering genug sein müssen, um sicher zu stellen, dass das Regulierungsmittel (9) bei dem minimalen Druck der Gaszufuhr (3) noch arbeitet.

2. Durchflusssteuerungssystem gemäß Anspruch 1, wobei die Gerätegrößen der Drosseln (10) durch die Formel berechnet werden:

$$Q = 0{,}036d^2c\sqrt{\frac{P}{S}}$$

wobei

Q = Volumen des Gases in Kubikmeter pro Stunde (m$^3$/h),
d = Durchmesser der Drossel (10) in Millimetern (mm),
P = Druckdifferential über die Düse (10) in Millibar (mbar),
S = spezifische Schwerkraft von Gas,
C = der "Koeffizient der Ausgabe" ist.

3. Durchflusssteuerungssystem gemäß Anspruch 1 oder 2, wobei das Ventilmittel (8) ein Magnetventil ist, und wobei das Regulierungsmittel (9) ein Einwegregler ist.

4. Durchflusssteuerungssystem gemäß einem der Ansprüche 1 bis 3, wobei die Drosseln (10) eine Düse oder eine Platte enthalten, wobei die Platte oder die Düse durch einen Gewindeeingriff mit dem Auslass des Ventilmittels und dem Regulierungsmittel (6) einer Durchflussleitung (4) angeordnet werden kann.

5. Durchflusssteuerungssystem gemäß einem der vorhergehenden Ansprüche, wobei das Ventilmittel (8) und das Regulierungsmittel (9) in einer Durchflussleitung eine Komposit-Einheit ausbilden.

6. Durchflusssteuerungssystem gemäß einem der vorhergehenden Ansprüche, mit nur zwei parallelen Durchflussleitungen (4, 5).

**7.** Durchflusssteuerungssystem gemäß einem der Ansprüche 1 bis 5, mit drei parallelen Durchflussleitungen (21, 22, 23), die eine gemeinsame Eingabe und eine gemeinsame Ausgabe haben, wobei einer der Durchflussleitungen (21, 24) begrenzt ist, um ein erstes Druckdifferential in der Durchflussleitung stromabwärts des entsprechenden Regulierungsmittels zu erzeugen, und wobei eine andere der Durchflussleitungen (22, 27) begrenzt ist, um ein zweites Druckdifferential in der Durchflussleitung stromabwärts des entsprechenden Regulierungsmittels zu erzeugen, wobei das zweite Druckdifferential kleiner als das erste Druckdifferential ist.

**Revendications**

**1.** Système de commande d'écoulement comportant une entrée reliée à une sortie d'une alimentation en gaz (3), plusieurs conduites d'écoulement (4, 5) en parallèle et une sortie (12) reliée à une entrée d'au moins un brûleur (2), afin de commander l'écoulement de gaz de telle sorte que l'entrée de pression (Pb) dans ledit brûleur (2) ne varie pas avec des fluctuations dans la sortie de pression de ladite alimentation en gaz (3), **caractérisé en ce qu'**il comporte des moyens destinés à assurer des modes de fonctionnement à petit feu et à grand feu, comportant les caractéristiques suivantes :

a) une première conduite d'écoulement (5) comporte seulement une unité de soupape (7) ayant des moyens de soupape (8) et des moyens de régulation (9) ;
b) chaque conduite d'écoulement additionnelle (4) reliée en parallèle à ladite première conduite d'écoulement (5) comporte une unité de soupape (6) ayant des moyens de soupape (8) et des moyens de régulation (9) et un étranglement (10) disposé en aval desdits moyens de régulation (9), afin de procurer une différence de pression dans la conduite d'écoulement (4) en aval des moyens de régulation (9), c'est-à-dire entre un premier point (11) en amont desdits étranglements (10) et un deuxième point (12) en aval desdits étranglements (10),
c) lesdits étranglements (10) sont des étranglements à orifice fixe ;
d) la taille desdits étranglements (10) est choisie afin de produire, dans le mode à petit feu, des pressions au niveau dudit premier point (11) plus élevées qu'une pression de grand feu au niveau dudit deuxième point (12), de sorte que les pressions au niveau dudit premier point (11) doivent être suffisamment basses pour s'assurer que les moyens de régulation (9) fonctionnent toujours à la pression minimum pour ladite alimentation en gaz (3).

**2.** Système de commande d'écoulement selon la revendication 1, dans lequel les tailles d'ouverture desdits étranglements (10) sont calculées par la formule :

$$Q = 0,036d^2c\sqrt{\frac{P}{S}}$$

où

Q = volume de gaz en mètre cube par heure (m³/h)
d = diamètre de l'étranglement (10) en millimètres (mm)
P = différence de pression au niveau du gicleur en millibar (mbar)
S = densité du gaz
C = le "coefficient de sortie"

**3.** Système de commande d'écoulement selon la revendication 1 ou 2, dans lequel lesdits moyens de soupape (8) sont constitués par une électrovanne et lesdits moyens de régulation (9) sont constitués par un régulateur à mode unique.

**4.** Système de commande d'écoulement selon l'une quelconque des revendications 1 à 3, dans lequel lesdits étranglements (10) comportent un gicleur ou une plaque, ladite plaque ou ledit gicleur peut être positionné par engagement fileté avec la sortie des moyens de soupape et moyens de régulation (6) d'une conduite d'écoulement (4).

**5.** Système de commande d'écoulement selon l'une quelconque des revendications précédentes, dans lequel les moyens de soupape (8) et les moyens de régulation (9) dans une conduite d'écoulement forment une unité composite.

**6.** Système de commande d'écoulement selon l'une quelconque des revendications précédentes, comportant seulement deux conduites d'écoulement (4, 5) en parallèle.

**7.** Système de commande d'écoulement selon l'une quelconque des revendications 1 à 5, comportant trois conduites d'écoulement (21, 22, 23) en parallèle ayant une entrée commune et une sortie commune, une desdites conduites d'écoulement (21, 24) est étranglée afin de procurer une première différence de pression dans la conduite d'écoulement en aval des moyens de régulation respectifs, et une autre desdites conduites d'écoulement (22, 27) est étranglée afin de procurer une deuxième différence de pression dans la conduite d'écoulement en aval des moyens de régulation respectifs, ladite deuxième différence de pression étant inférieure à ladite première différence de pression.

# Fig.1.

# Fig.2.

## Fig.3.

# Fig.4.

# Fig.5.

# Fig.6.

Fig.7.